Europäisches Patentamt

**European Patent Office**

**Office européen des brevets**

(11) Veröffentlichungsnummer: **0 243 945**
A2

(12) # EUROPÄISCHE PATENTANMELDUNG

(21) Anmeldenummer: 87106196.6

(22) Anmeldetag: 29.04.87

(51) Int. Cl.³: **A 47 B 21/00**
**F 16 M 11/04, G 06 F 1/00**

(30) Priorität: 30.04.86 DE 3614718

(43) Veröffentlichungstag der Anmeldung:
04.11.87 Patentblatt 87/45

(84) Benannte Vertragsstaaten:
AT CH ES FR GB IT LI NL SE

(71) Anmelder: Krüger, Günther
Lerchenstrasse 22
D-2300 Kiel(DE)

(72) Erfinder: Krüger, Günther
Lerchenstrasse 22
D-2300 Kiel(DE)

(74) Vertreter: Tönnies, Jan G.
Niemannsweg 133
D-2300 Kiel 1(DE)

(54) **Vorrichtung zum Aufnehmen eines Datensichtgerätes und einer mit diesem verbundenen Tastatur.**

(57) Vorrichtung zum Aufnehmen eines Datensichtgerätes und einer mit diesem verbundenen Tastatur, mit einer Säule (36), einem an der Säule (36) um diese verschwenkbar gelagerten Tragelement (10), einer auf dem Tragelement (10) aufliegenden, das Datensichtgerät aufnehmenden Platte (16), einem als Teleskoprohr ausgebildeten, aus einer Ruheposition in eine abgesenkte Arbeitsposition ausziehbaren Tastaturarm (20) und einer den Tastaturarm (20) haltenden Halterung (22), wobei das Tragelement (10) als längenverstellbarer Arm ausgebildet ist, die Platte (16) um eine mit der Achse der Säule (36) nicht zusammenfallenden ersten vertikalen Achse (12) drehbar auf dem Tragelement (10) gelagert ist, die Halterung (22) für den Tastaturarm (20) um eine zweite vertikale Achse (18) drehbar an dem Tragelement (10) gelagert ist, und der Tastaturarm (20) um eine horizontale Achse (38) verschwenkbar an die Halterung (22) angelenkt ist.

Fig. 1

EP 0 243 945 A2

Günther Krüger, Lerchenstraße 22, 2300 Kiel
-------------------------------------------------------
Vorrichtung zum Aufnehmen eines Datensichtgerätes
und einer mit diesem verbundenen Tastatur
-------------------------------------------------------

＝

Die Erfindung betrifft eine Vorrichtung zum Aufnehmen
eines Datensichtgerätes nach dem Oberbegriff des Anspruchs 1, wie sie aus dem deutschen Gebrauchsmuster 84
19 659 vorbekannt ist.

Die bekannte Vorrichtung ermöglicht es bereits, ein mit
einer Tastatur versehenes Datensichtgerät an mehreren
Arbeitsplätzen zu verwenden. Zu diesem Zweck sind Datensichtgerät und Tastatur auf einer Führungsschiene
verschiebbar und um eine Säule verdrehbar gelagert. Die
vorbekannte Vorrichtung ist damit konstruktiv aufwen-

932

dig. Nachteilig ist weiter, daß zwischen den die Arbeitsplätze bildenden Schreibtischen ein Abstand eingehalten werden muß, in den die Führungsschienen eingebracht werden.

Der Erfindung liegt damit die Aufgabe zugrunde, eine Vorrichtung der einangs genannten Art zu schaffen, die konstruktiv weniger aufwendig ist.

Erfindungsgemäß wird diese Aufgabe dadurch gelöst, daß das Tragelement als längenverstellbarer Arm ausgebildet ist, die Platte um eine mit der Achse der Säule nicht zusammenfallenden ersten vertikalen Achse drehbar auf dem Tragelement gelagert ist, die Halterung für den Tastaturarm um eine zweite vertikale Achse drehbar an dem Tragelement gelagert ist, und der Tastaturarm um eine horizontale Achse verschwenkbar an die Halterung angelenkt ist.

Obwohl die Halterung auch mehrstückig ausgebildet sein kann, was eine Verschwenkung des Tastaturarms um seine vertikale Achse relativ zu dem Datensichtgerät ermöglicht, ist vorzugsweise vorgesehen, daß die Halterung einstückig das Tragelement dreiseitig umgebend ausgebildet ist, wobei die erste vertikale Achse und die zweite vertikale Achse koaxial verlaufen.

Das Tragelement ist vorzugsweise als Teleskoparm ausgebildet, es kann jedoch als mit Gelenken versehener Schwenkarm ausgebildet sein.

Bei einem bevorzugten Ausführungsbeispiel ist die Tastaturhalterung vorne mit einem Bügel versehen.

932

Eine ganz besonders bevorzugte Ausführungsform zeichnet sich dadurch aus, daß die Halterung mit einer von dieser wenigstens in der Arbeitsposition des Tastaturarms schräg nach unten weisenden, den Tastaturarm bei dessen Einschieben aus seiner schrägen Arbeitsposition in seine horizontale Ruheposition leitenden Führung versehen ist.

Da eine auch in der Ruheposition des Tastaturarms nach unten weisende Führung sich störend auswirken könnte, wird weiter vorgeschlagen, daß die Führung um eine - von der Tastaturhalterung aus gesehen - vor der Achse des Tastaturarms liegende, horizontale Schwenkachse aus der schrägen Position in eine horizontale Position abkippbar ausgebildet ist.

Dabei kann vorgesehen sein, daß die Führung U-förmig mit in der horizontalen Position nach hinten weisenden Schenkeln, deren lichter Abstand größer ist als die Breite des Tasturarmes, ausgebildet ist, und der unterhalb des Tragelements 10 verlaufende Abschnitt der Halterung als nach unten offenes U-Profil ausgebildet ist, wobei die Schenkel der Führung an die vertikal verlaufenden Schenkel der Halterung angelenkt sind.

Als besonders geeignete konstruktive Lösung hat sich eine Ausbildung erwiesen, bei der der Tastaturarm mit einem Plättchen versehen ist, das bei dem Einschieben des Tastaturarms in die Halterung auf in der schrägen Arbeitsstellung oberhalb der Schwenkachse positionierte Abschnitte der Führung stößt und diese aus der schrägen Position in die horizontale Postion zwingt.

Dabei kann vorgesehen sein, daß das Plättchen mit einer

932

nach unten weisenden Erhebung versehen ist, die bei
Ausziehen des Tastaturarms auf den die beiden Schenkel
der Führung verbindenden Steg stößt, bevor der Tastaturarm nach Freigabe der in der Ruhestellung nach hinten weisenden Abschnitte der Schenkel der Führung durch
die Platte nach unten abschwenkbar ist, und so einen
durch leichtes Anheben des Tastaturarms überwindbaren
Anschlag bildet.

Die Erhebung wird dabei vorzugsweise durch eine Niete
gebildet.

Die Erfindung wird im folgenden anhand einer Zeichnung
erläutert. Dabei zeigt:

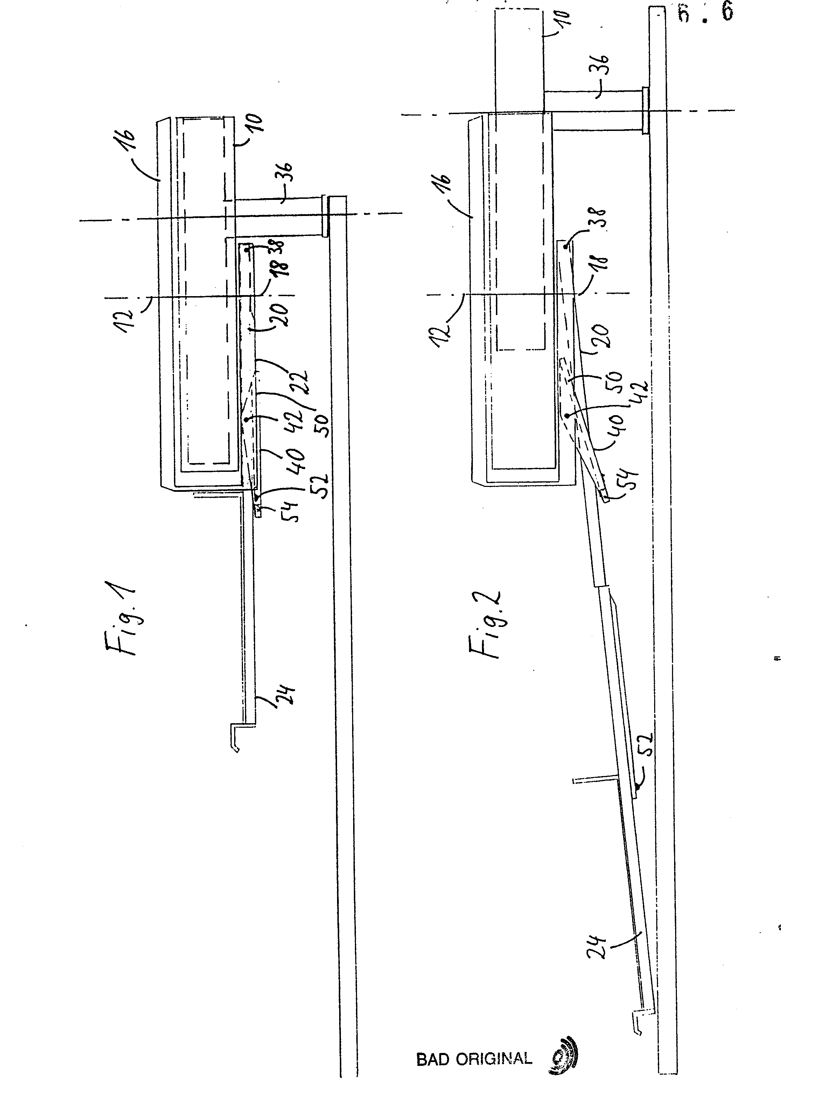

Fig. 1      eine Seitenansicht der Vorrichtung in
            Ruheposition.

Fig. 2      eine seitliche Ansicht der Vorrichtung
            in Arbeitsposition; und

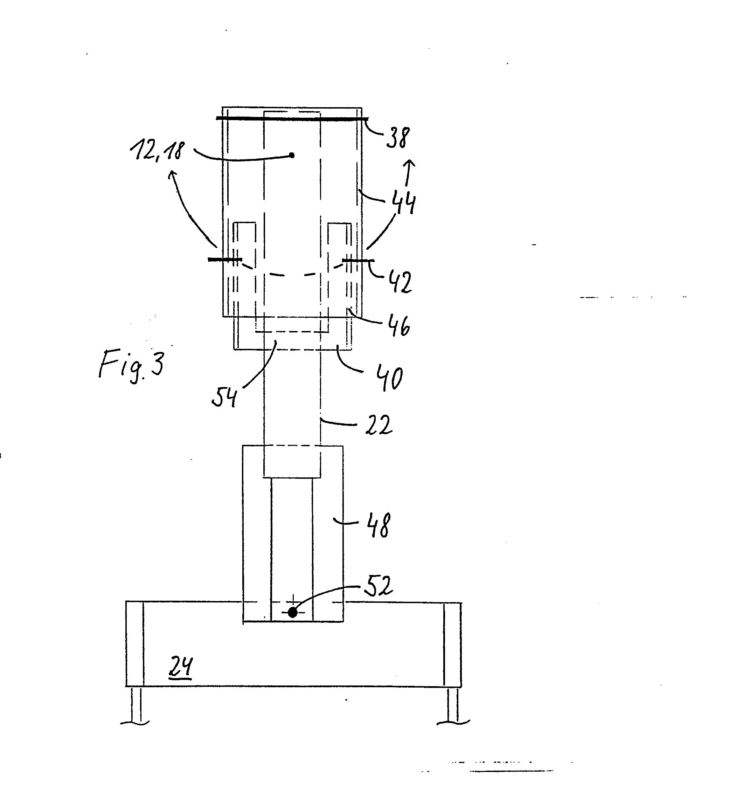

Fig. 3      eine Darstellung der Tastaturhalterung,
            des Tastaturarms und des unteren Abschnitts der Halterung.

Die Vorrichtung besteht aus einem sich horizontal
erstreckenden, als Teleskoparm ausgebildeten Trageelement 10, das auf einer Säule 36 ruht, wobei entweder
das Tragelement 10 um die Achse der Säule 36 verschwenkbar oder aber die Säule 36 gemeinsam mit dem
Tragelement 10 um ihre eigene Achse drehbar ist.

Das Tragelement 10 trägt eine Halterung 22, die U-
förmig ausgebildet oberhalb, vor und unterhalb des

932

Tragelements 10 verläuft und um dieses um miteinander
koaxial verlaufende vertikale Achsen 12 bzw. 18 verschwenkbar ist. Die Halterung 22 trägt weiter eine
Platte 16, die das Datensichtgerät aufnimmt.

Der unterhalb des Tragelements 10 verlaufende Schenkel
der Halterung 22 ist als nach unten offenes U-Profil
ausgebildet, das an seinem hinteren Ende - in der eingeschobenen Position des Tragelements 10 unmittelbar
vor der Säule 36 - eine horizontal verlaufende Achse 38
aufnimmt, an der ein als Teleskoprohr ausgebildeter
Tastaturarm 20 angelenkt ist. Dieser Tastaturarm 20
trägt an seinem freien Ende eine Tastaturhalterung 24,
auf die die mit dem Datensichtgerät über ein Kabel
verbundene Tastatur aufgesetzt ist.

An die beiden vertikalen Schenkel 46 des U-fömigen
unteren Abschnitts der Halterung 22 sind - von der
Tastaturhalterung 24 aus gesehen - vor der Achse 38 des
Tastaturarms die in der Ruhestellung des Tastaturarms
20 nach hinten weisenden Schenkel 44 einer Führung 40
um eine horizontale Schwenkachse 42 verschwenkbar. Die
beiden vorne über einen Steg 54 miteinander verbundenen
Schenkel 44 der Führung 40 haben einen lichten Abstand
voneinander, der größer ist als die Breite des Tastaturarms 24; der Tastaturarm 24 kann also von der Führung 40 unbehindert in die Arbeitsposition abgesenkt
werden.

Die Schenkel 46 der Führung 40 weisen Abschnitte 50
auf, die sich oberhalb der Schwenkachse 42 erstrecken
und mit einem Plättchen 48 zusammenwirken, das unter
dem Tastaturarm 24 verläuft. In der Arbeitspositon des
Tastaturarms 24 fällt der nach vorne weisende, mit dem Steg 54 versehene Abschnitt der Führung 40 durch die Schwerkraft nach unten, wird jedoch in einer Verstellung von etwa 45° durch Anstoßen des oberen Abschnitts 50 der Schenkel 44 an einem weiteren Abfallen gehindert. Bei Einschieben des Tastaturarms 24 in die Halterung 22 stößt das unter dem Tastaturarm 24 angeordnete Plättchen zunächst gegen den schräg nach unten und vorne weisenden größeren Abschnitt der Führung 40. Bei weiterem Einschieben wird der Tastaturarm 24 so selbsttätig in die horizontale Position geführt. Wenn der Berührungspunkt zwischen dem Plättchen 48 und den Schenkeln 44 der Führung 40 einen Ort oberhalb der Schwenkachse 42 erreicht, wird die Führung 40 um die Schwenkachse 42 in eine horizontale Position verschwenkt, nach weiterem Einschieben des Tastaturarms 24 in die Halterung 22 ist die Ruheposition erreicht, wobei in dieser Ruheposition die Führung 40 nicht mehr nach unten über die Halterung 22 hinaus ragt und so ein Verschwenken der ganzen Vorrichtung um die Achse der Säule 36 nicht behindert.

Bei Herausziehen des Tastaturarms 24 aus der Halterung 22 stößt eine Niete auf dem Plättchen 48 gegen den die beiden Schenkel 44 der Führung 40 verbindenen Steg 54 und bildet so einen Anschlag, der es ermöglicht, den Tastaturarm bis zu einer Position herauszuziehen, bevor das Plättchen 48 die Führung 40 und damit ein Abschwenken des Tastaturarms um die horizontale Achse 38 frei gibt. Auf diese Weise ist es möglich, bei nur kurzzeitiger Benutzung der Tastatur, die ein vollständiges Absenken auf den Arbeitsplatz nicht erforderlich macht, diese um das erforderliche Stück unter der Platte 16 herauszuziehen. Durch leichtes Anheben des Tastaturarms 24 wird die Niete 52 über den Steg der Führung 40

932

hinweggehoben, wodurch das weitere Herausziehen des Tastaturarms 24 ermöglicht wird.

Der Steg 54 bildet weiter eine Begrenzung des Winkels, um den der Tastaturarm 20 um seine horizontale Achse 38 abgeschwenkt werden kann.

Die vorgeschlagene Vorrichtung ermöglicht die Verwendung eines Datensichtgerätes und einer mit diesem verbundenen Tastatur an mehreren Arbeitsplätzen, wobei die Vorsehung einer mit der Säule koaxialen Schwenkachse und einer weiteren, ein Verschwenken des Datensichtgerätes und der Tastatur mit einem variablen Abstand von der Säule angeordneten weiteren vertikalen Achse die Erreichung jeder beliebigen Stellung in einem relativ großen Bereich ermöglicht. Die Vorsehung einer besonderen Führung für den Tastaturarm ermöglicht ein einfaches, einhändiges Einschieben des Tastaturarms aus der Arbeitsposition in die Ruheposition. Dabei zeichnet sich die vorgeschlagene Vorrichtung durch eine geringe Bauhöhe aus. Das Verschwenken der das Datensichtgerät und die Tastatur aufnehmenden Vorrichtung über die Arbeitsplätze ist auch dann möglichlich wenn sich auf der unter der Vorrichtung befindlichen Arbeitsfläche Papiere oder dgl. befinden.

PATENTANSPRÜCHE
================

1. Vorrichtung zum Aufnehmen eines Datensichtgerätes und einer mit diesem verbundenen Tastatur, mit einer Säule (36), einem an der Säule (36) um diese verschwenkbar gelagerten Tragelement (10), einer auf dem Tragelement (10) aufliegenden, das Datensichtgerät aufnehmenden Platte (16), einem als Teleskoprohr ausgebildeten, aus einer Ruheposition in eine abgesenkte Arbeitsposition ausziehbaren Tastaturarm (20) und einer den Tastaturarm (20) haltenden Halterung (22), dadurch gekennzeichnet, daß

- das Tragelement (10) als längenverstellbarer Arm ausgebildet ist,

- die Platte (16) um eine mit der Achse der Säule (36) nicht zusammenfallenden ersten vertikalen Achse (12) drehbar auf der Halterung (22) gelagert ist,

- die Halterung (22) für den Tastaturarm (20) um eine zweite vertikale Achse (18) drehbar an dem Tragelement (10) gelagert ist, und

- der Tastaturarm (20) um eine horizontale Achse (38) verschwenkbar an die Halterung (22) angelenkt ist.

932

- 2 -                                        **0243945**

2.    Vorrichtung nach Anspruch 1, dadurch gekennzeichnet, daß die Halterung (22) einstückig das Tragelement (10) dreiseitig umgebend ausgebildet ist, wobei die erste vertikale Achse (12) und die zweite vertikale Achse (18) koaxial verlaufen.

3.    Vorrichtung nach einem der vorangehenden Ansprüche, dadurch gekennzeichnet, daß das Tragelement (10) als Teleskoparm ausgebildet ist.

4.    Vorrichtung nach einem der vorangehenden Ansprüche, dadurch gekennzeichnet, daß die Tastaturhalterung (24) vorne mit einem Bügel (32) versehen ist.

5.    Vorrichtung nach einem der vorangehenden Ansprüche, dadurch gekennzeichnet, daß die Halterung (22) mit einer von dieser wenigstens in der Arbeitsposition des Tastaturarms (20) schräg nach unten und vorne weisenden, den Tastaturarm (20) bei dessen Einschieben aus seiner schrägen Arbeitsposition in seine horizontale Ruheposition leitenden Führung (40) versehen ist.

6.    Vorrichtung nach Anspruch 5, dadurch gekennzeichnet, daß die Führung (40) um eine - von der Tastaturhalterung (24) aus gesehen - vor der Achse (38) des Tastaturarms (20) liegende, horizontale Schwenkachse (42) aus der schrägen Position in eine horizontale Position kippbar ausgebildet ist.

932

7. Vorrichtung nach Anspruch 6, dadurch gekennzeichnet, daß die Führung (40) U-förmig mit in der horizontalen Position nach hinten weisenden Schenkeln (44),
deren lichter Abstand größer ist als die Breite des
Tasturarmes (24), ausgebildet ist, und der unterhalb
des Tragelements (10) verlaufende Abschnitt der Halterung (22) als nach unten offenes U-Profil ausgebildet
ist, wobei die Schenkel (44) der Führung (40) an die
vertikal verlaufenden Schenkel (46) der Halterung (22)
angelenkt sind.

8. Vorrichtung nach einem der Ansprüche 5 bis 7,
dadurch gekennzeichnet, daß der Tastaturarm (24) mit
einem Plättchen (48) versehen ist, das schmaler als der
lichte Abstand der Schenkel (44) aber breiter als der
Tastaturarm (24) ist und bei dem Einschieben des Tastaturarms (24) in die Halterung (22) auf in der schrägen
Arbeitsstellung oberhalb der Schwenkachse (42) positionierte Abschnitte (50) der Führung (40) stößt und diese
aus der schrägen Position in die horizontale Postion
zwingt.

9. Vorrichtung nach Anspruch 8, dadurch gekennzeichnet, daß das Plättchen (48) mit einer nach unten weisenden Erhebung versehen ist, die bei Ausziehen des Tastaturarms (24) auf den die beiden Schenkel (44) der
Führung (40) verbindenden Steg (54) stößt, bevor der
Tastaturarm (24) nach Freigabe der in der Ruhestellung
nach hinten weisenden Abschnitte (50) der Schenkel (44)
der Führung (40) durch die Platte (48) nach unten

932

abschwenkbar ist, und so einen durch leichtes Anheben des Tastaturarms (24) überwindbaren Anschlag bildet.

10. Vorrichtung nach Anspruch 9, dadurch gekennzeichnet, daß die Erhebung durch eine Niete (52) gebildet wird.

932

Fig.1

Fig.2

0243945

0,100196.6

Fig.3